# EUROPÄISCHE PATENTSCHRIFT

(11) **EP 1 216 338 B1**
(45) Veröffentlichungstag und Bekanntmachung des Hinweises auf die Patenterteilung: **29.12.2004**
(21) Anmeldenummer: 00965819.6
(22) Anmeldetag: 01.09.2000
(51) Int. Cl.: E05F 11/48, B60J 5/04

(54) **SEIL-ODER BOWDENFENSTERHEBER**
WINDOW LIFT COMPRISING A ROPE OR BOWDEN CABLE
LEVE-VITRE A CABLE DE TRANSMISSION OU CABLE BOWDEN

(30) Priorität: 14.09.1999 DE 19944916
(43) Veröffentlichungstag der Anmeldung: 26.06.2002
(73) Patentinhaber: Brose Fahrzeugteile GmbH & Co. KG, 96450 Coburg (DE)
(72) Erfinder: WEBER, Horst, D-95339 Wirsberg (DE); HOFMANN, Gerhard, D-96253 Untersiemau (DE)
(74) Vertreter: Ninnemann, Detlef, Dipl.-Ing.
(86) Internationale Anmeldenummer: PCT/DE2000/003052
(87) Internationale Veröffentlichungsnummer: WO 2001/020114

(56) Entgegenhaltungen:
- WO-A-98/50658
- DE-C- 3 637 961
- FR-A- 2 768 765
- US-A- 5 058 322

## Beschreibung

Die Erfindung bezieht sich auf einen Seil- oder Bowdenfensterheber für Kraftfahrzeuge gemäß dem Oberbegriff des Anspruchs 1.

Ein Seil- oder Bowdenfensterheber der genannten Art ist aus der WO 98/50658 bekannt und enthält eine geprägte, insbesondere tiefgezogene Trägerplatte mit eingeprägten Führungsschienen für die Mitnehmer einer Fensterscheibe. Die geprägte Trägerplatte besteht aus einem tiefgezogenen Blechprofil mit mehreren winklig zueinander stehenden Abschnitten. Auf der Fläche des Trägerblechs sind durch Topfprägung oder Tiefziehen gebildete Führungsschienen des Seil- oder Bowdenfensterhebers vorgesehen, die gleichzeitig zur Aufnahme von auf einem Trägerelement angeordneten Seilumlenkrollen dienen.

Vor dem Aufstecken der Trägerelemente mit den darauf befestigten Seilumlenkrollen werden die Mitnehmer auf die durch Topfprägung gebildeten Führungsschienen aufgesteckt. Anschließend werden die Trägerelemente auf die Enden der geprägten Schienen aufgesteckt und das Seil um die Seilumlenkrollen gelegt und mit den Mitnehmern verbunden. Auf den Führungsschienen gleiten die Mitnehmer nach oben bzw. nach unten in Abhängigkeit von der Zugrichtung des Fensterheberseils, das über die Seilumlenkrollen geführt wird, wobei gegebenenfalls an den Seilumlenkrollen angeordnete Seileinhängungen zur Anbringung von Bowdenzughüllen dienen. Zum Antrieb des Seil- oder Bowdenfensterhebers dient eine Motor-Getriebeeinheit, die an einer entsprechenden Prägung mit Durchstellungen auf der Trägerplatte vorgesehen ist.

Aus der US-C-50 58 322 ist ein Seilfensterheber mit einem manuellen Antrieb bekannt, der eine Führungsschiene mit einem in Längsrichtung der Führungsschiene verlaufenden Schlitz aufweist, durch den ein Mitnehmer greift, der an beiden Seiten des Schlitzes der Führungsschiene anliegt. An den Enden der Führungsschiene sind obere und untere Befestigungsplatten mit daran angeordneten Umlenkrollen vorgesehen. Die Führungsschiene selbst ist als geformtes Blechteil ausgebildet, das zusammen mit der oberen und unteren Befestigungsplatte in einer Fahrzeugtür befestigt wird.

Die DE 36 37 961 C1 zeigt eine Hebevorrichtung für absenkbare Scheiben von Kraftfahrzeugen, die Führungsbahnen umfaßt, die in eine am Türrahmen befestigte Blechplatte eingeprägt oder aus der Blechplatte herausgestanzt sind. Die Führungsbahnen bestimmen den Weg einer Scheibe zwischen einer abgesenkten, einen durch den Türrahmen begrenzten oberen Türausschnitt freigebenden Lage und einer angehobenen, den Türausschnitt ausfüllenden Lage. Weiterhin weist die Hebevorrichtung einen Antrieb auf, der aus einer mechanischen Kurbelbetätigung in Verbindung mit einem Zahnrad besteht, das auf eine Kette wirkt und über zwei ober- und unterhalb jeder Führungsbahn liegende und als drehbar gelagerte Zahnräder ausgebildete Umlenkrollen geführt ist.

Aufgabe der vorliegenden Erfindung ist es, einen Seil- oder Bowdenfensterheber der im Oberbegriff des Anspruchs 1 genannten Art zu schaffen, der eine exakte geometrische Zuordnung der Einzelteile des Fensterhebers in einem Herstellungsschritt, eine einfache Herstellung und Montage sowie wahlweise eine Naßraumausführung eines Fensterhebers oder eine Naß-Trockenraumtrennung des Fensterhebers mit einfachen Mitteln und wenigen Herstellungsschritten gewährleistet.

Diese Aufgabe wird durch die Merkmale des Anspruchs 1 gelöst.

Die erfindungsgemäße Lösung schafft eine exakte geometrische Zuordnung und Ausrichtung der Führungsschienen, der darauf geführten Mitnehmer und der in den Mitnehmern befestigten Fensterscheibe in einem Herstellungsschritt, eine einfache Herstellung und Montage des Fensterhebers sowie nach Bedarf eine Naßraumausführung des Fensterhebers oder eine Naß/Trockenraumtrennung des Fensterhebers mit einfachen Mitteln und in wenigen Herstellungsschritten.

Ausgehend von dem aus der WO 98/50658 bekannten Seil- oder Bowdenfensterheber mit in den Flächen einer Trägerplatte eingeprägten Führungsschienen liegt der vorliegenden Erfindung die Überlegung zugrunde, die Führungsschienen derart zu gestalten und in die Trägerplatte zu integrieren, daß sowohl eine Naßraumausführung als auch eine Naß/Trockenraumtrennung eines Seil- oder Bowdenfensterhebers möglich und mit einfachen Mitteln herstellbar sein soll. Weiterhin soll die Prägung der Trägerplatte in nur wenigen, vorzugsweise in nur einem Arbeitsschritt durchgeführt werden und die Seilführung sowohl mittig als auch außermittig in Bezug auf den Mitnehmer ohne die Notwendigkeit konstruktiver Änderungen der Führungsschienen möglich sein.

Durch das Herausformen der mindestens einen Führungsschiene aus der Basisfläche der Trägerplatte mit einem in Längsrichtung der so geformten Führungsschiene verlaufenden Schlitz, an dessen Außen- und Innenseite der Mitnehmer anliegt und durch den Schlitz greift sowie durch die feuchtigkeitsdichte Abdeckung der offenen Seite der aus der Basisfläche der Trägerplatte herausgeformten Führungsschiene oder durch die feuchtigkeitsdichte Abdeckung der Basisfläche selbst wird sowohl eine exakte Führung der Einzelteile des Fensterhebers als auch eine leicht herstellbare Naß/Trockenraumtrennung des Fensterhebers geschaffen.

Durch einfaches Abdecken der gewölbten Führungsschiene im Bereich der Basisfläche der Trägerplatte wird eine Naß/-Trockenraumtrennung des Fensterhebers mit einfachsten Mitteln bewirkt und gewährleistet eine einfache Montage und Justage des Fensterhebers sowie im Bedarfsfall für Wartungs- oder Reparaturzwecke eine leichte Zugänglichkeit der Einzelteile des Seil- oder Bowdenfensterhebers.

Die Abdeckung der Führungsschiene zur Naß-/Trockenraumtrennung kann eben ausgebildet sein und in der Ebene der Basisfläche der Trägerplatte oder Führungsschiene angeordnet werden. Eine solche ebene Abdeckung kann in einfachster Form aus einem Dauerklebestreifen oder einer Klebefolie bestehen, die an den an die aus der Basisfläche herausgeformten Führungsschiene angrenzenden Rändern der Trägerplatte befestigt wird.

Alternativ kann die Abdeckung als Teil der Türinnenverkleidung der Fahrzeugtür ausgebildet werden, daß heißt aus einem entsprechend aus der Türinnenverkleidung herausgeformten und die aus der Basisfläche der Trägerplatte herausgeformte Führungsschiene abdeckenden Teil bestehen. Mit dieser Ausführungsform wird eine Reduzierung der Teilezahl und eine Vereinfachung des Montageaufwands erzielt.

Weiterhin kann die Abdeckung aus einer als Korrosionsschutz oder als Schalldämmung dienenden, vorzugsweise aus einer Folie oder einer Schaumstoffschicht ausgebildeten Kaschierung bestehen, die die Trägerplatte vollflächig abdeckt, so daß die Abdeckung eine Mehrfachfunktion, nämlich die der Naß-/Trockenraumtrennung, des Korrosionsschutzes sowie der Schalldämmung erfüllt.

Eine weitere Ausgestaltung der Abdeckung der Führungsschiene zur Naß-/Trockenraumtrennung besteht aus einem in die Innenseite der Führungsschiene eingesetzten Formteil, so daß diese Art der Abdeckung nicht nur die Naß-/Trockenraumtrennung bewirkt, sondern infolge seiner mechanisch stabilen Form auch Stabilisierungsfunktionen sowie ggf. Abstützfunktionen für das Fensterheberseil erfüllen kann.

Zur Abstützung des Fensterheberseils weist das Formteil eine entsprechende Aufnahme für das Fensterheberseil auf und ist hinreichend fest mit der Trägerplatte verbunden, in dem es beispielsweise in seitlich der aus der Basisfläche herausgestellten Führungsschiene angeordneten Führungsnuten der Trägerplatte eingeschoben wird und damit eine formschlüssige Verbindung mit der Trägerplatte eingeht.

Weiterhin besteht die Möglichkeit, den Mitnehmer ein- oder mehrteilig auszubilden und das Fensterheberseil so mit dem Mitnehmer zu verbinden, daß es wahlweise innerhalb der Wölbung oder außerhalb der aus der Basisfläche der Trägerplatte herausgeformten Führungsschiene liegt.

Bei einer zweiteiligen Ausbildung des Mitnehmers liegt der eine Teil des Mitnehmers an der Außenseite der Führungsschiene und der andere Teil des Mitnehmers an der Innenseite der Führungsschiene an.

Im Bereich der Seilnippelkammer kann der Mitnehmer geteilt sein und zwei Öffnungen oberhalb und unterhalb der Seilnippelkammer zur Aufnahme des das zweite Teil des Mitnehmers bildenden Gegenstücks aufweisen, das vorzugsweise aus einem Blechwinkel mit einer Kunststoffeinlage besteht.

In einer einteiligen Ausbildung weist der Mitnehmer einen länglichen Befestigungs bzw. Gleitbereich auf, der nach dem Durchstecken durch den Schlitz der Führungsschiene und Drehen um seine Querachse an der Außenseite bzw. Innenseite an den Rändern anliegt, die an den Schlitz der Führungsschiene angrenzen. In dieser einteiligen Ausführungsform kann der Mitnehmer an jeder beliebigen Stelle des Führungsschlitzes in die Führungsschiene eingesetzt und durch Drehen um seine Querachse beidseitig mit den Rändern des Führungsschlitzes in Eingriff gebracht werden.

Das Fensterheberseil kann mittig zum Mitnehmer mit dessen Seilnippelkammer verbunden werden. Wenn das Seil die Ebene der Trägerplatte unabhängig von der Position des Mitnehmers niemals durchgreift, kann als Abdeckung eine einfache, ebene Klebefolie Verwendung finden.

Wenn das zwischen den Umlenkeinrichtung verlaufende Seil die Basisfläche der Trägerplatte zümindestens stellenweise schneidet, ist die Abdeckung so ausgebildet, daß sie das Seil an keiner Stelle berührt. Dies kann durch eine im Querschnitt gewölbte Formgebung der Abdeckung realisiert werden.

Das Herausformen von Funktionselementen für Einrichtungen in einer Fahrzeugtür wie das Herausformen von Führungsschienen für Seil- oder Bowdenfensterheber ist nicht nur auf diesen Anwendungszweck beschränkt. So kann weiterhin ein Führungsschlitz in der Trägerplatte oder ein aus der Basisfläche der Trägerplatte herausgeformtes Führungsteil vorgesehen werden, durch das ein Gleitelement oder Befestigungsteil gesteckt und dadurch ggf. verschiebbar mit der Trägerplatte verbunden ist. Das Gleitelement oder Befestigungsteil kann unmittelbar oder über Befestigungselemente mit einer Armlehne der Fahrzeugtür verbunden werden. Durch eine entsprechende Abdeckung eines solchen Führungsschlitzes oder eines aus der Basisfläche herausgeformten Führungselementes kann die geforderte Naß-/Trockenraumtrennung in der Fahrzeugtür gewährleistet und zur Montage einer Armlehne eine Stellungskorrektur während oder nach der Montage zur optimalen Positionierung der Armlehne vorgenommen werden.

Die rampenförmige Ausbildung des oberen und unteren Endbereichs der Führungsschienen, d.h. das kontinuierliche Ansteigen der Ausformung bzw. Prägung der Führungsschienen aus der Basisfläche der Trägerplatte oder die in Längsrichtung bogenförmige Ausbildung der Führungsschienen gewährleisten eine optimale Seilführung und Einführung in die Umlenkeinrichtungen.

Das Herausformen bzw. Ausprägen der Führungsschiene aus der Basisfläche der Trägerplatte kann durch Tiefziehen oder durch Stanzen einer metallischen Trägerplatte oder durch Spritzgießen oder Thermoverformung einer Kunststoff-Trägerplatte verwirklicht werden.

Um auch im Seitenbereich der Trägerplatte die Naß-/Trockenraumtrennung zu gewährleisten, werden nach einem weiteren Merkmal der Erfindung die Seitenteile der Trägerplatte feuchtigkeitsdicht mit einer Trägerplattenaufnahme der Kraftfahrzeugtür verbunden.

Anhand von in der Zeichnung dargestellten Ausführungsbeispielen soll der der Erfindung zugrunde liegende Gedanke näher erläutert werden. Es zeigen:
- Figur 1 -: eine schematisch-perspektivische Darstellung einer geprägten oder tiefgezogenen Trägerplatte mit integrierten Führungsschienen für einen ein- oder doppelsträngigen Seil- oder Bowdenfensterheber;
- Figuren 2 und 3 -: eine Draufsicht und eine Schrägansicht einer Trägerplatte mit integrierten Führungsschienen, Seilumlenkrollen, Versteifungsprägungen und Aufnahmeöffnungen für Bauteile einer Kraftfahrzeugtür oder eines Türmoduls;
- Figuren 4 bis 7 -: Querschnitte durch eine aus der Basisfläche der Trägerplatte herausgeformten Führungsschiene und mit der Führungsschiene verbundenen ein- und zweiteiligen Mitnehmern;
- Figur 8 -: einen Querschnitt durch eine aus der Basisfläche einer Trägerplatte herausgeformte Führungsschiene mit seitlichen Führungsnuten und einer formschlüssig mit der Führungsschiene verbundenen Abdeckung;
- Figur 9 -: eine Draufsicht und einen Querschnitt durch eine herausgeformte Führungsschiene und einen Mitnehmer in zwei Phasen der Verbindung des Mitnehmers der Führungsschiene.
- Figur 10 -: eine perspektivische Darstellung eines zweiteiligen Mitnehmers vor der Verbindung der beiden Mitnehmerteile und
- Figur 11 -: der zweiteilige Mitnehmer gemäß Figur 10 im zusammengesetzten Zustand.

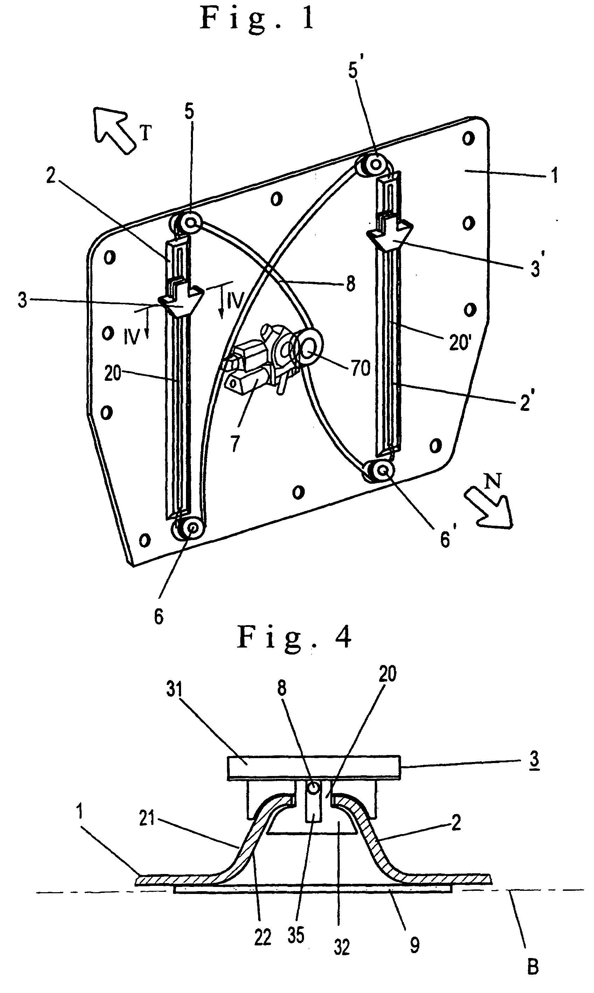

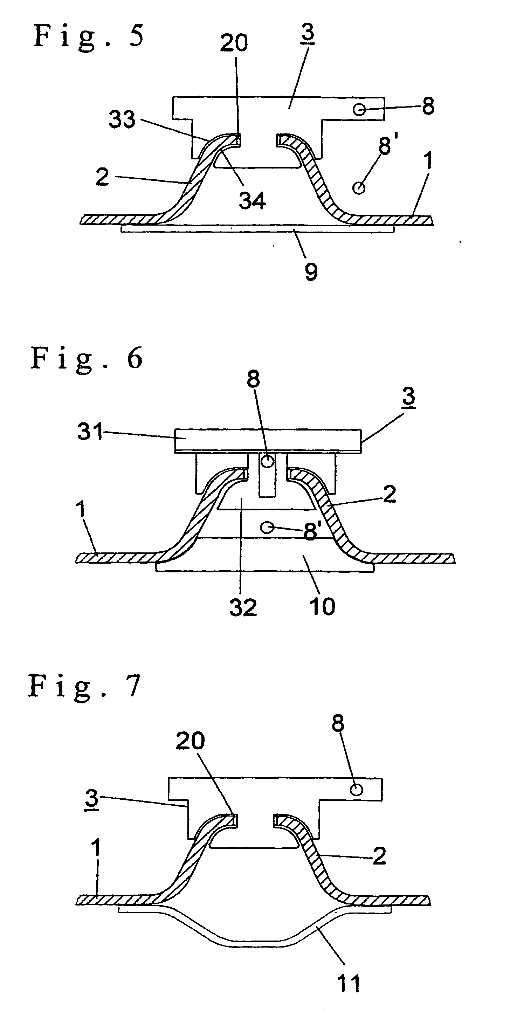

Die in Figur 1 dargestellte Trägerplatte 1 weist zwei durch Prägen oder Tiefziehen aus der Basisfläche der Trägerplatte 1 herausgeformte Führungsschienen 2, 2' auf, auf denen Mitnehmer 3, 3' in Längsrichtung der Führungsschienen 2, 2' verschiebbar gelagert sind und eine Fensterscheibe aufnehmen. Die Mitnehmer 3, 3' sind mit einem Seil 8 verbunden, das über Seilumlenkrollen 5, 5' im Bereich der Oberkante der Trägerplatte 1 sowie Seilumlenkrollen 6, 6' im Bereich der Unterkante der Trägerplatte 1 geführt und mit einer Seiltrommel 70 verbunden ist, die von einer Motor-Getriebeeinheit 7 angetrieben wird. Die Mitnehmer 3, 3' sind in einem in Längsrichtung der geprägten Führungsschienen 2, 2' vorgesehenen Schlitz 20, 20' geführt und liegen - wie nachstehend anhand der Figuren 4 bis 7 näher erläutert wird - sowohl an der Außenseite als auch an der Innenseite der Ausformung der Führungsschienen 2, 2' an.

Figur 1 deutet eine Naß/Trockenraumtrennung des Seil- oder Bowdenfensterhebers an, da die feuchtigkeitsempfindliche Motor-Getriebeeinheit 7 auf der in Blickrichtung hinteren und durch den Pfeil T angedeuteten Trockenraumseite der Trägerplatte 1 angeordnet ist, während die Mitnehmer 3, 3', das Seil 8 und die Seiltrommel 70 auf der in Blickrichtung vorderen Seite der Trägerplatte 1 befindlichen und durch den Pfeil N angedeuteten Naßraumseite vorgesehen sind. Zur Trennung von Naß- und Trockenraum ist die Seiltrommel 70 über eine durch eine Bohrung der Trägerplatte 1 gesteckte Antriebswelle mit der Motor-Getriebeeinheit 7 verbunden, wobei die Durchführung der Antriebswelle durch die Trägerplatte 1 abgedichtet ist.

Wie bereits der Anordnung der Einzelteile des Seil- oder Bowdenfensterhebers gemäß Figur 1 zu entnehmen ist, kann durch einfaches Abdecken der offenen Basisfläche der Führungsschienen 2, 2' in der Ebene der Basisfläche der Trägerplatte 1 die Naß/Trockenraumtrennung vorgenommen und gewährleistet werden.

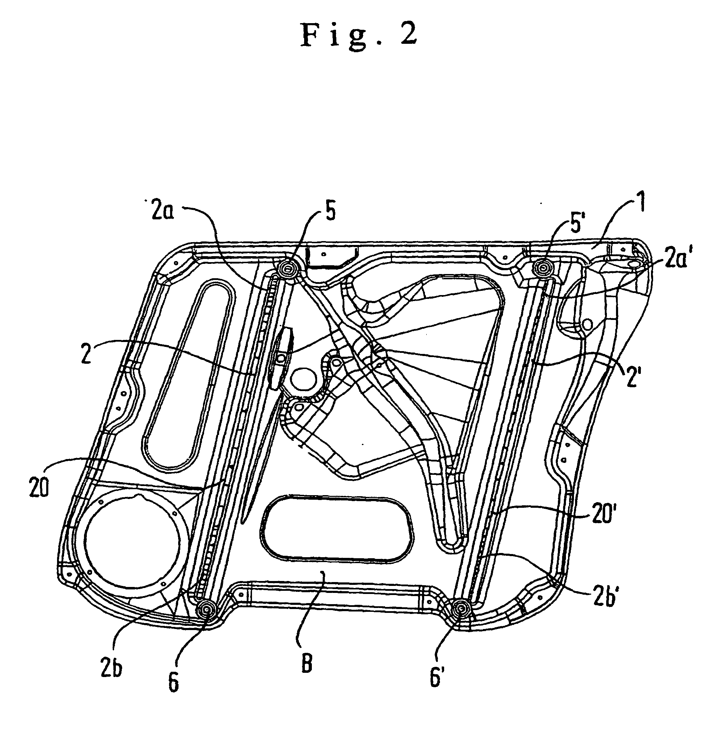

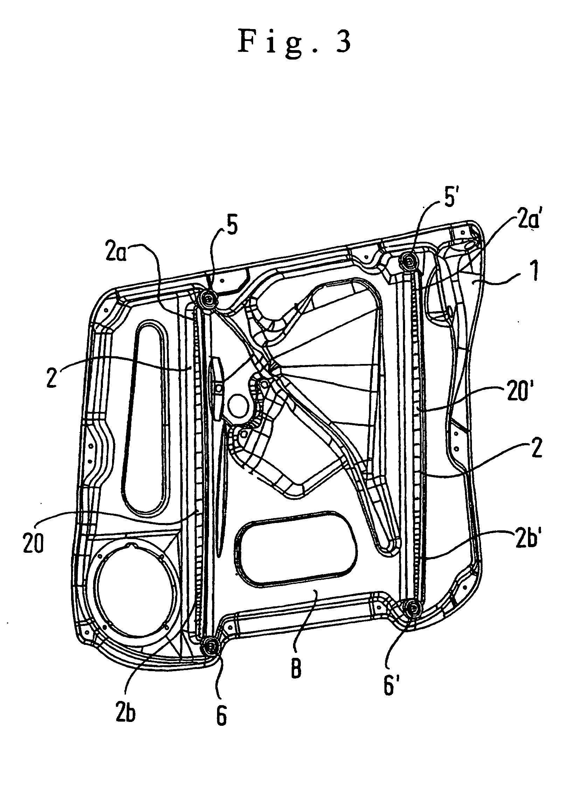

Durch die einteilige Ausführungsform mit in die Trägerplatte 1 integrierten, aus der Basisfläche B der Trägerplatte 1 herausgeformten Führungsschienen 2, 2' und den daraus resultierenden definierten Abständen der beiden Führungsschienen 2, 2' ist die Einhaltung sehr enger Toleranzen bei der Herstellung in nur einem Arbeitsgang möglich. Weiterhin vorgesehene und den Darstellungen der Trägerplatte 1 gemäß den Figuren 2 und 3 zu entnehmende Versteifungsprägungen ermöglichen ein offenes System sowie infolge der aus den Versteifungsprägungen resultierenden Steifigkeiten eine Gewichtserleichterung durch Verwendung dünner Materialien bei gleichzeitig hoher Seitenaufprallfestigkeit.

Die in Figur 2 in einer Frontalansicht bzw. in Figur 3 in einer Schrägansicht dargestellte, geprägte oder tiefgezogene Trägerplatte 1 verdeutlicht die Ausformung der Trägerplatte 1 sowie die verschiedenen Bereiche des Materialaufbaus, die durch Prägung bzw. Tiefziehen aus der Basisfläche B der Trägerplatte 1 gebildet werden.

Aus der Basisfläche B der Trägerplatte 1 ragen die herausgeformten Führungsschienen 2, 2' mit einem darin in Längsrichtung verlaufenden Schlitz 20, 20' hervor. An den Enden der Führungsschienen 2, 2' sind die Seilumlenkrollen 5, 5' bzw. 6, 6' so angeordnet, daß das Seil in den Schlitz 20, 20' eingeführt und mit dem in Längsrichtung der aus der Basisfläche der Trägerplatte 1 herausgeformten Führungsschienen 2, 2' verschieblich gelagerten Mitnehmern verbunden werden kann. Die zwischen den Führungsschienen 2, 2' befindliche Fläche der Trägerplatte 1 ist so geformt, daß das Seil des Seil- oder Bowdenfensterhebers oberhalb der Fläche der Trägerplatte 1 ohne Berührung der Trägerplatte 1 verläuft und mit der hier nicht dargestellten Seiltrommel der Motor-Getriebeeinheit des Seil- oder Bowdenfensterhebers verbunden werden kann.

Zur optimalen Seilführung sind die oberen und unteren Endbereiche 2a, 2a' bzw. 2b, 2b' der aus der Basisfläche der Trägerplatte 1 herausgeformten Führungsschienen 2, 2' rampenförmig ausgebildet, d.h. sie steigen ausgehend von ihren Enden in diesen Endbereichen kontinuierlich bis zur Ausfaormungshöhe an, was durch die Verdichtung der Querlinien im Schlitz 20 bzw. 20' bis zum Übergang zu den Seilumlenkrollen 5, 5' bzw. 6, 6' angedeutet ist.

Alternativ können die aus der Basisfläche der Trägerplatte 1 herausgeformten Führungsschienen in Längsrichtung bogenförmig ausgebildet werden, was ebenfalls eine optimale Seilführung und Einführung in die Umlenkeinrichtungen gewährleistet.

Die den Darstellungen der Trägerplatte 1 in den Figuren 2 und 3 zu entnehmenden Prägungen verdeutlichen die Strukturierung der Trägerplatte 1 in einer Weise, daß deren Steifigkeit bei geringerer Materialdicke der Trägerplatte 1 insbesondere gegenüber Seitenaufprallkräften optimal ist.

Verschiedene nicht näher bezeichnete Bereiche der Trägerplatte 1 dienen zur Aufnahme, Befestigung oder Positionierung von Türbauteilen wie Tieftonlautsprechern, Schloßsystemene oder dgl.

Figur 4 zeigt einen Querschnitt durch eine aus der Basisfläche der Trägerplatte 1 herausgeformte Führungsschiene 2 entlang der Linie IV - IV gemäß Figur 1 mit im Scheitelpunkt der Ausformung angeordnetem Schlitz 20 und einem auf der gewölbten Führungsschiene 2 montierten zweiteiligen Mitnehmer 3, dessen äußeres Teil 31 an der Außenseite 21 der Führungsschiene 2 und dessen Innenteil 32 an der Innenseite 22 der Ausformung der Führungsschiene 2 anliegt. Ein Schlitz 35 im Außen- und/oder Innenteil 31, 32 des zweiteiligen Mitnehmers 3 dient zur Aufnahme und Führung des Seils 8, das in einer Seilnippelkammer des Mitnehmers 3 mit dem Mitnehmer 3 verbunden ist.

Zur Naß/Trockenraumtrennung des Seil- oder Bowdenfensterhebers ist eine Abdeckung 9 in der Ebene der Basisfläche B der Trägerplatte 1 vorgesehen. Hierbei handelt es sich im einfachsten Fall um einen Dauerklebestreifen ausreichender Breite, der auf die der Trockenraumseite der Trägerplatte 1 an die aus der Basisfläche der Trägerplatte 1 herausgeformte Führungsschiene 2 angrenzenden Ränder aufgeklebt wird und damit eine wirksame Feuchtigkeitssperre im Bereich der offenen Basisfläche der Führungsschiene 2 bildet.

Figur 5 zeigt einen Querschnitt durch eine aus der Basisfläche der Trägerplatte 1 herausgeformte Führungsschiene 2 mit im Scheitelpunkt der Ausformung ausgebildetem und in Längsrichtung der Führungsschiene 2 verlaufendem Schlitz 20 zur Aufnahme eines einteiligen Mitnehmers 3. Der einteilige Mitnehmer 3 ist so gestaltet, daß ein Teil 33 des Mitnehmers 3 an der Außenseite der Führungsschiene 2 anliegt, während das andere Teil an der Innenseite der Führungsschiene 2 anliegt.

Das Innenteil 34 des einteiligen Mitnehmers 3 und/oder der durch den Schlitz 20 greifende Teil des einteiligen Mitnehmers 3 ist so gestaltet, daß der einteilige Mitnehmer 3 von der Außenseite der aus der Basisfläche der Trägerplatte 1 herausgeformten Führungsschiene 2 durch den Schlitz 20 in die Führungsschiene 2 eingeklinkt werden kann. Beispielsweise kann dies durch entsprechende Formung des Innenteils 34 durch Einstecken des einteiligen Mitnehmers 3 in den Schlitz 20 und anschließendes Drehen des Mitnehmers 3 erfolgen. Alternativ hierzu kann der einteilige Mitnehmer 3 schräg in den Schlitz 20 eingeführt und durch eine anschließende Kippbewegung formschlüssig und in Längsrichtung der Führungsschiene 2 verschiebbar mit dieser verbunden werden.

Im Unterschied zu dem in Figur 4 dargestellten zweiteiligen Mitnehmer 3 weist der in Figur 5 dargestellte einteilige Mitnehmer 3 eine außermittige Befestigung des Seils 8 auf. Die außermittige Anlenkung des Seils am Mitnehmer 3 erzeugt im Unterschied zur mittigen Anlenkung des Seils ein Kippmoment und führt bei der Längsverschiebung des Mitnehmers 3 zu etwas erhöhter Reibung und damit zu höheren Reibungsverlusten. Durch eine entsprechende Materialpaarung lassen sich diese Verluste aber minimieren.

Bei einer gewölbten Trägerplatte 1 ist zusätzlich darauf zu achten, daß das mit dem Mitnehmer 3 verbundene und über die Seilumlenkrollen 5 bzw. 6 an den Enden der aus der Basisfläche der Trägerplatte 1 herausgeformten Führungsschiene 2 geführte Seil die Basisfläche der Trägerplatte 1 nicht schneidet, d.h. es ist ein hinreichender Abstand der Seilführung von der Trägerplatte 1 vorzusehen. Dies soll in Figur 5 durch das mit 8' bezeichnete Seil für den Fall einer gewölbten Trägerplatte 1 angedeutet werden.

Die in Figur 5 dargestellte Anordnung zeigt ebenfalls eine Naß/Trockenraumtrennung durch Anbringen eines Dauerklebestreifens 9 auf der Trockenraumseite der Trägerplatte 1 entlang der aus der Basisfläche der Trägerplatte 1 herausgeformten Führungsschiene 2. Für eine derartige Naß/Trockenraumtrennung kann anstelle eines einfachen Dauerklebestreifens 9 auch jede beliebige andere Form eines Abdeckteils verwendet werden. In den Figuren 6 und 7 sind in Verbindung mit einem ein- oder zweiteiligen Mitnehmer 3 unterschiedliche Formen einer derartigen Abdeckung der aus der Basisfläche der Trägerplatte 1 herausgeformten Führungsschiene 2 zur Naß/Trockenraumtrennung dargestellt.

Figur 6 zeigt eine Abdeckung der Basis der Führungsschiene im Bereich der Basisfläche der Trägerplatte 1 mittels eines in die aus der Basisfläche der Trägerplatte 1 herausgeformten Führungsschiene 2 eingesetzten Formteils 10, das vorzugsweise aus Kunststoff besteht. Dieses Formteil 10 kann kraft- und/oder formschlüssig in die durch die Ausformung der Führungsschiene 2 gebildete Öffnung eingesetzt werden.

Figur 7 zeigt die Möglichkeit einer Naß/Trockenraumtrennung mittels eines Kunststoff-Formstücks 11, das an den an die Öffnung der aus der Basisfläche der Trägerplatte 1 herausgeformten Führungsschiene 2 angrenzenden Seitenrändern anliegt und mit geeigneten Mitteln beispielsweise mittels einer Klebe- oder Steckverbindung mit der Trockenraumseite der Trägerplatte 1 verbunden ist.

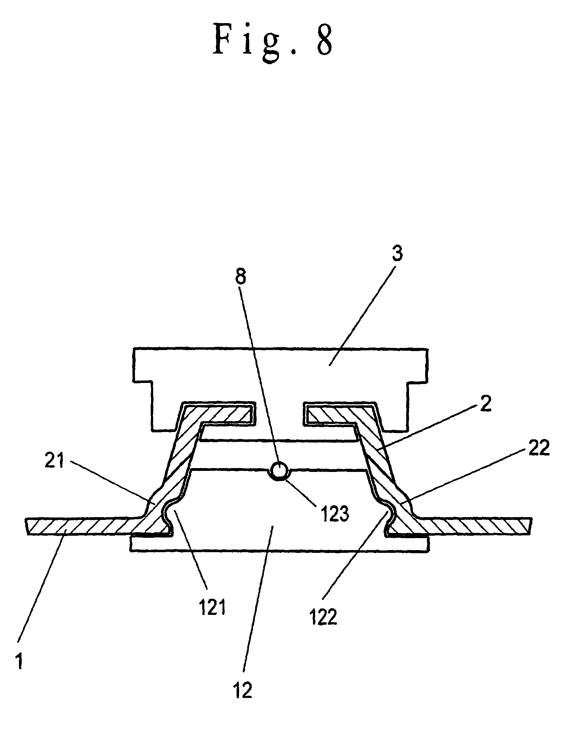

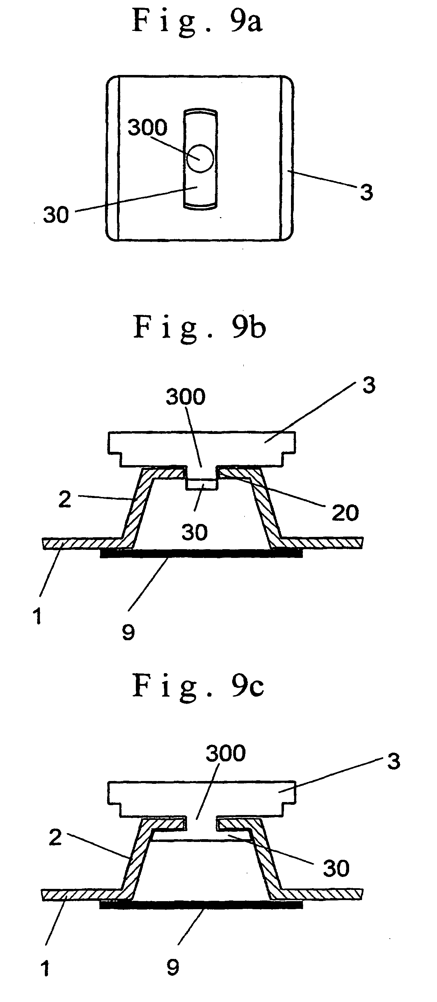

Figur 8 zeigt eine aus der Basisfläche einer Trägerplatte 1 herausgeformte Führungsschiene 2 mit seitlichen Nuten 21, 22, die an die Basisfläche der Trägerplatte 1 angrenzen. In diesen Nuten 21, 22 ist eine Abdeckung 12 mit seitlichen, mit den Nuten 21, 22 korrespondierenden Vorsprüngen 121, 122 eingesetzt. Durch die stabile Ausführungsform der Abdeckung 12 in Verbindung mit einer im Bereich des Fensterheberseils 8 angeordneten Seilführung 123 ist eine äußerst stabile Abdeckung zur Naß-/Trockenraumtrennung und gleichzeitigen Führung des Fensterheberseils 8 gegeben. Der Mitnehmer 3 kann wahlweise ein- bzw. zweiteilig ausgebildet sein entsprechend den voranstehenden Ausführungsformen bzw. der einteiligen Ausführungsform eines Mitnehmers gemäß Figur 9.

Figur 9a zeigt eine Draufsicht auf die Unterseite eines einteiligen Mitnehmers 3 mit einem länglichen Befestigungsund Gleitbereich 30, der über eine zylindrische Durchsteckachse 300 mit dem an der Außenseite der Führungsschiene 2 anliegenden Teil des Mitnehmers 3 verbunden ist.

Dieser einteilige Mitnehmer 3 wird von der Außenseite der Führungsschiene 2 in den Schlitz 20 der Führungsschiene eingesetzt, wobei der Befestigungs- und Gleitbereich 30 mit dem Schlitz 20 der Führungsschiene 2 fluchtet.

Durch Drehen des einteiligen Mitnehmers 3 um 90° legt sich der längliche Befestigungs- und Gleitbereich 30 an die Innenseite der Führungsschiene 2 an und bewirkt somit eine formschlüssige Verbindung des Mitnehmers 3 mit der aus der Basisfläche der Trägerplatte 1 herausgeformten Führungsschiene 2 unter Erhalt der länglichen Verschiebbarkeit des Mitnehmers 3 in bezug auf die Längserstreckung der Führungsschiene 2.

Als Abdeckung kann eine der vorstehend beschriebenen Abdekkungen verwendet werden, beispielsweise ein Klebestreifen oder eine ebene Folie 9, die auf die Ränder der aus der Basisfläche der Trägerplatte 1 herausgeformten Führungsschiene 2 aufgesetzt und mit den Rändern verbunden wird.

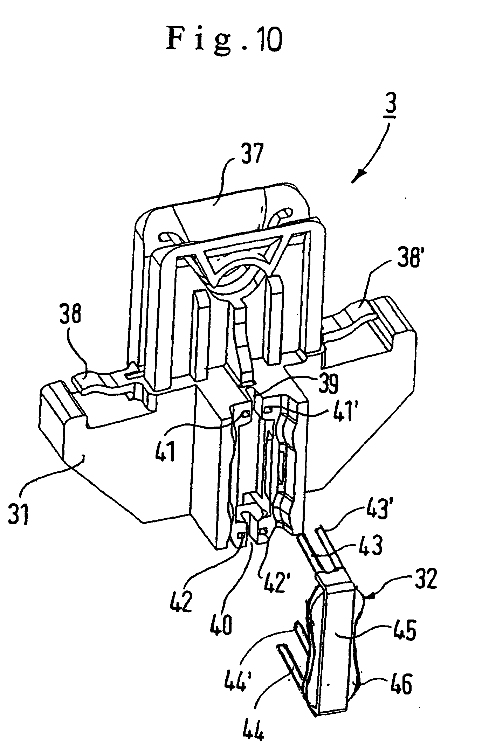

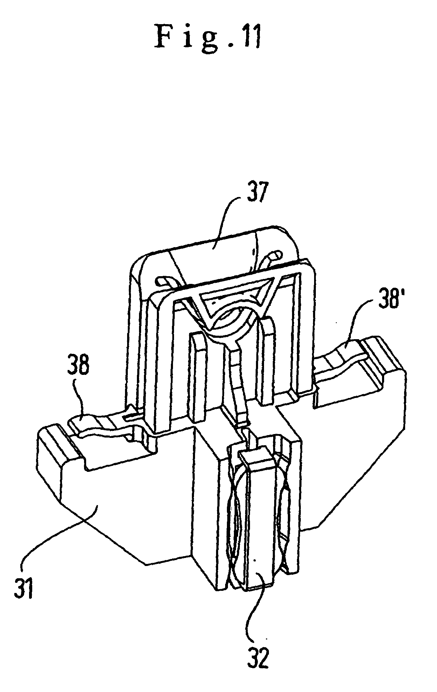

In den Figuren 10 und 11 ist eine Ausführungsform eines zweiteiligen Mitnehmers vor und nach der Verbindung der beiden Mitnehmerteile dargestellt, der sich in besonderer Weise für die Verbindung mit einer aus der Basisfläche der Trägerplatte 1 herausgeformten Führungsschiene 2, 2' der vorstehend beschriebenen Art eignet.

Der Mitnehmer 3 weist eine Fensterscheibenaufnahme 37 auf, in die eine Fensterscheibe eingesteckt und mit dem Mitnehmer 3 verbunden wird. Zum Ausgleich von Kippbewegungen in der Fensterscheibe sind federnde Zungen 38, 38' an der Unterseite der Fensterscheibenaufnahme 37 vorgesehen. Der Mitnehmer-Grundkörper 31 des zweiteiligen Mitnehmers 3 weist eine Seil-Nippelkammer 36 auf, entlang der die Trennungslinie zwischen dem Mitnehmer-Grundkörper 31 und einem Gegenstück 32, d.h. den beiden Teilen 31, 32 des zweiteiligen Mitnehmers 3 verläuft.

Oberhalb und unterhalb der Seil-Nippelkammer 6 sind Öffnungen 41, 41' und 42, 42' zur Aufnahme von Verbindungsstegen 43, 43'; 44, 44' des Gegenstücks 32 des Mitnehmers 3 vorgesehen, die zur Verbindung des Mitnehmer-Grundkörpers 31 mit dem Gegenstück 32 rastend in die Öffnungen 41, 41' bzw. 42, 42' eingreifen und nach dem Verbinden des Gegenstücks 32 mit dem Mitnehmer-Grundkörper 31 durch Umbiegen oder in anderer Weise eine feste, formschlüssige Verbindung zwischen beiden Teilen 31, 32 des zweiteiligen Mitnehmers 3 nach dessen Montage auf der aus der Basisfläche der Trägerplatte 1 herausgeformten Führungsschiene 2, 2' herstellen.

Zwischen den Öffnungen 41, 41' und 42, 42' ist eine Seilöffnung 39, 40 der Seil-Nippelkammer 36 zur Aufnahme des Seils vorgesehen, das in der Seil-Nippelkammer 36 fest mit dem Mitnehmer 3 beispielsweise durch Anordnung eines auf dem Seil befestigten Formstücks verbunden wird.

Das Gegenstück 32 des Mitnehmers 3 besteht vorzugsweise aus einem Blechwinkel 45 mit abgewinkelten Verbindungsstegen 43, 43' und 44, 44' sowie einer Kunststoffeinlage 46, die in dem in Figur 11 dargestellten montierten Zustand des Mitnehmers 3 an der Innenseite der aus der Basisfläche der Trägerplatte 1 herausgeformten Führungsschiene 2, 2' anliegt.

## Patentansprüche

1. Seil- oder Bowdenfensterheber für Kraftfahrzeuge mit mindestens einer an einer Trägerplatte (1) einer Kraftfahrzeugtür angeordneten, aus der Basisfläche (B) der Trägerplatte (1) herausgeformten Führungsschiene (2, 2') mit einem in ihrer Längsrichtung verlaufenden Schlitz (20, 20'), einem entlang der Führungsschiene (2, 2') verschiebbaren, eine Fensterscheibe aufnehmenden Mitnehmer (3, 3'), der zumindest teilweise an der Außenseite (21) und der Innenseite (22) der Führungsschiene (2, 2') anliegt und durch den Schlitz (20, 20') greift, an den Enden der Führungsschiene (2, 2') angeordneten Umlenkeinrichtungen (5, 5'; 6, 6') und einem mit dem Mitnehmer (3, 3') und mit einer Antriebsvorrichtung (7, 70) wirkverbundenen und über die Umlenkeinrichtung geführten Seil (8),
**dadurch gekennzeichnet,**
**daß** die Trägerplatte (1) selbst eine Trennungs- und Abdichtfunktion übernimmt und daß die offene Seite der aus der Basisfläche (B) der Trägerplatte (1) herausgeformten Führungsschienen (2, 2') feuchtigkeitsdicht abgedeckt ist.

2. Fensterheber nach Anspruch 1, **dadurch gekennzeichnet,** däß die Abdeckung (9) eben ausgebildet und in der Ebene der Basisfläche (B) der Trägerplatte (1) bzw. der Führungsschiene (2, 2') angeordnet ist.

3. Fensterheber nach Anspruch 1 oder 2, **dadurch gekennzeichnet, daß** die Abdeckung aus einem Dauerklebestreifen (9) besteht.

4. Fensterheber nach Anspruch 1 oder 2, **dadurch gekennzeichnet, daß** die Abdeckung aus einem in die Innenseite (22) der Führungsschiene (2, 2') eingesetzten Formteil (10) besteht.

5. Fensterheber nach Anspruch 1 oder 2, **dadurch gekennzeichnet, daß** die Abdeckung aus einem auf den an die Führungsschiene (2, 2') angrenzenden Rändern der Trägerplatte (1) aufliegenden und mit der Trägerplatte (1) verbundenen Formstück (11) besteht.

6. Fensterheber nach Anspruch 1 oder 2, **dadurch gekennzeichnet, daß** die Abdeckung aus einem Formstück (12) besteht, das mit seitlichen Vorsprüngen (121, 122) in Nuten (21, 22) der aus der Basissfläche (B) der Trägerplatte (1) herausgeformten Führungsschiene (2, 2') oder in Nuten, Schlitze oder Haken an der Trägerplatte (1) einsetzbar ist und eine Seilaufnahme (123) zur Führung des Seils (8) aufweist.

7. Fensterheber nach den Ansprüchen 4, 5 oder 6, **dadurch gekennzeichnet, daß** das Formteil (10) oder Formstück (11) aus einem Kunststoff-Formteil oder -stück besteht.

8. Fensterheber nach mindestens einem der vorangehenden Ansprüche, **dadurch gekennzeichnet, daß** der Mitnehmer (3, 3') zweiteilig ausgebildet ist und daß der eine Teil (31) des Mitnehmers (3, 3') an der Außenseite (21) der Führungsschiene (2, 2') und der andere Teil (32) des Mitnehmers (3, 3') an der Innenseite (22) der Führungsschiene (2, 2') anliegt.

9. Fensterheber nach Anspruch 8, **dadurch gekennzeichnet, daß** der Mitnehmer (3, 3') im Bereich der Seil-Nippelkammer (36) geteilt ist und zwei Öffnungen (41, 41'; 42, 42') oberhalb und unterhalb der Seil-Nippelkammer (36) zur Aufnahme des das zweite Teil (32) des Mitnehmers (3, 3') bildenden Gegenstücks aufweist.

10. Fensterheber nach Anspruch 9, **dadurch gekennzeichnet, daß** das Gegenstück (32) aus einem Blechwinkel (45) mit einer Kunststoffeinlage (46) besteht.

11. Fensterheber nach mindestens einem der voranstehenden Ansprüche 1 bis 7, **dadurch gekennzeichnet, daß** der Mitnehmer (3, 3') einteilig ausgebildet ist, daß der an der Außenseite (21) der Führungsschiene (2, 2') anliegende Teil (33) des Mitnehmers (3, 3') mit dem Seil (8) verbunden ist und daß der an der Innenseite (22) der Führungsschiene (2, 2') anliegende Teil (34) des Mitnehmers (3, 3') so geformt ist, daß der Mitnehmer (3, 3') in den Schlitz (20) der Führungsschiene (2, 2') einsetzbar und mit der Führungsschiene (2, 2') formschlüssig und in Längsrichtung der Führungsschiene (2, 2') verschieblich verbindbar ist.

12. Fensterheber nach Anspruch 11, **dadurch gekennzeichnet, daß** das Seil (8) außermittig mit dem Mitnehmer (3, 3') verbunden ist.

13. Fensterheber nach Anspruch 12, **dadurch gekennzeichnet, daß** das Seil (8) außerhalb der durch die Ausprägung der Führungsschiene (2, 2') gegebenen Führungsfläche mit dem Mitnehmer (3, 3') verbunden ist.

14. Fensterheber nach mindestens einem der voranstehenden Ansprüche 1 bis 7, **dadurch gekennzeichnet, daß** der Mitnehmer (3, 3') einteilig ausgebildet ist und einen länglichen Befestigungs- und Gleitbereich (30) aufweist, der nach dem Durchstecken durch den Schlitz (20) der Führungsschiene (2, 2') und Drehen der Durchsteckachse (300) um die Querachse des einteiligen Mitnehmers (3, 3') an der Außenseite bzw. Innenseite an den Rändern der Führungsschiene (2, 2') anliegt, die an den Schlitz (20) der Führungsschiene (2, 2') angrenzen.

15. Fensterheber nach mindestens einem der voranstehenden Ansprüche, **dadurch gekennzeichnet, daß** das Seil (8) mittig zum Mitnehmer (3, 3') mit dessen Seil-Nippelkammer (36) verbunden ist.

16. Fensterheber nach mindestens einem der voranstehenden Ansprüche für gewölbte Trägerplatten, **dadurch gekennzeichnet, daß** das zwischen den Umlenkeinrichtungen (5, 5'; 6, 6') verlaufende Seil (8) die Basisfläche (B) der Trägerplatte (1) nicht schneidet.

17. Fensterheber nach mindestens einem der voranstehenden Ansprüche für gewölbte Trägerplatten, **dadurch gekennzeichnet, daß** das zwischen den Umlenkeinrichtungen (5, 5'; 6, 6') verlaufende Seil (8) die Basisfläche (B) der Trägerplatte (1) zumindest stellenweise schneidet und daß die Abdeckung (9) so ausgebildet ist, daß sie das Seil (8) an keiner Stelle berührt.

18. Fensterheber nach mindestens einem der vorangehenden Ansprüche, **dadurch gekennzeichnet, daß** der obere und untere Endbereich (2a, 2a'; 2b, 2b') der Führungsschienen (2, 2') rampenförmig ausgebildet ist.

19. Fensterheber nach mindestens einem der vorangehenden Ansprüche, **dadurch gekennzeichnet, daß** die Führungsschienen (2, 2') in Längsrichtung bogenförmig in Bezug auf die Basisfläche der Trägerplatte (1) geformt sind.

20. Fensterheber nach mindestens einem der vorangehenden Ansprüche, **dadurch gekennzeichnet, daß** in der Trägerplatte (1) zusätzliche Führungsschlitze und/oder aus der Basisfläche (B) der Trägerplatte (1) herausgeformte Führungselemente zur Aufnahme von mit Konstruktionsteilen von Elementen einer Fahrzeugtür, insbesondere von Armlehnen, verbundenen Gleit- oder Befestigungselementen vorgesehen sind.

21. Fensterheber nach mindestens einem der vorangehenden Ansprüche, **dadurch gekennzeichnet, daß** die Ausprägung der Führungsschiene (2, 2') durch Tiefziehen oder Stanzen einer metallischen Trägerplatte (1) oder durch Spritzgießen oder Thermoverformung einer Kunststoff-Trägerplatte (1) gebildet ist.

22. Fensterheber nach mindestens einem der vorangehenden Ansprüche, **dadurch gekennzeichnet, daß** die Seitenränder der Trägerplatte (1) feuchtigkeitsdicht mit einer Trägerplattenaufnahme der Kraftfahrzeugtür verbunden sind.

## Claims

1. Cable or Bowden cable window lifter for motor vehicles having at least one guide rail (2, 2') with a longitudinally aligned slot (20, 20') and mounted on a carrier plate (1) of a motor vehicle door, a carrier (3, 3') holding a window pane and displaceable along the guide rail (2, 2'), wherein the carrier bears at least in part against the outside (21) and the inside (22) of the guide rail (2, 2') and engages through the slot (20, 20'), reversing devices (5, 5'; 6, 6') mounted at the ends of the guide rail (2, 2'), and a cable (8) in active connection with the carrier (3, 3') and with a drive device (7, 70) and guided over the reversing device,
**characterised in that**
the carrier plate (1) itself undertakes the separating and sealing function and that the open side of the guide rails (2, 2') shaped out from the base surface (B) of the carrier plate (1) is covered in a manner which provides a moisture seal.

2. Window lifter according to claim 1 **characterised in that** the cover (9) is designed flat and is mounted in the plane of the base surface (B) of the carrier plate (1) or the guide rail (2, 2').

3. Window lifter according to claim 1 or 2 **characterised in that** the cover comprises a permanent adhesive strip (9).

4. Window lifter according to claim 1 or 2 **characterised in that** the cover consists of a shaped part (10) inserted into the inside (22) of the guide rail (2, 2').

5. Window lifter according to claim 1 or 2 **characterised in that** the cover consists of a shaped member (11) connected to the carrier plate (1) and resting on the edges of the carrier plate (1) which adjoin the guide rail (2, 2').

6. Window lifter according to claim 1 or 2 **characterised in that** the cover consists of a shaped member (12) which can be inserted by side projections (121, 122) into grooves (21, 22) of the guide rail (2, 2') which is shaped out of the base surface (B) of the carrier plate (1), or in grooves, slots or hooks on the carrier plate (1), and has a cable socket (123) for guiding the cable (8).

7. Window lifter according to claims 4, 5 or 6 **characterised in that** the shaped part (10) or shaped member (11) consists of a moulded plastics part or member.

8. Window lifter according to at least one of the preceding claims **characterised in that** the carrier (3, 3') is formed in two parts and that the one part (31) of the carrier (3, 3') bears against the outside (21) of the guide rail (2, 2') and the other part (32 of the carrier (3, 3') bears against the inside (22) of the guide rail (2, 2').

9. Window lifter according to claim 8 **characterised in that** the carrier (3, 3') is divided in the region of the cable nipple chamber (36) and has two openings (41, 41'; 42, 42') above and below the cable nipple chamber (36) for holding the counter member which forms the second part (32) of the carrier (3, 3').

10. Window lifter according to claim 9 **characterised in that** the counter member (32) is made from a sheet metal angle (45) with a plastics insert (46).

11. Window lifter according to at least one of the preceding claims 1 to 7 **characterised in that** the carrier (3, 3') is formed in one piece, that the part (33) of the carrier (3, 3') bearing against the outside (21) of the guide rail (2, 2') is connected to the cable (8) and that the part (34) of the carrier (3, 3') bearing against the inside (22) of the guide rail (2, 2') is shaped so that the carrier (3, 3') can be inserted in the slot (20) of the guide rail (2, 2') and can be connected with keyed engagement with the guide rail (2, 2') whilst displaceable in the longitudinal direction of the guide rail (2, 2').

12. Window lifter according to claim 11 **characterised in that** the cable (8) is connected eccentrically to the carrier (3, 3').

13. Window lifter according to claim 12 **characterised in that** the cable (8) is connected to the carrier (3, 3') outside of the guide surface produced by the imprinting of the guide rail (2, 2').

14. Window lifter according to at least one of the preceding claims 1 to 7 **characterised in that** the carrier (3, 3') is formed in one piece and has a longitudinal fixing and slide region (30) which after pushing through the slot (20) of the guide rail (2, 2') and turning the through axis (300) about the transverse axis of the one-piece carrier (3, 3') bears on the outside and inside respectively against the edges of the guide rail (2, 2') which adjoin the slot (20) of the guide rail (2, 2').

15. Window lifter according to at least one of the preceding claims **characterised in that** the cable (8) is connected centrally relative to the carrier (3, 3') to its cable nipple chamber (36).

16. Cable window lifter according to at least one of the preceding claims for curved carrier plates **characterised in that** the cable (8) running between the reversing devices (5, 5'; 6, 6') does not intersect the base surface (B) of the carrier plate (1).

17. Window lifter according to at least one of the preceding claims for curved carrier plates, **characterised in that** the cable (8) running between the reversing devices (5, 5'; 6, 6') intersects the base surface (B) of the carrier plate (1) at least in parts and that the cover (9) is formed so that it does not contact the cable (8) at any point.

18. Window lifter according to at least one of the preceding claims **characterised in that** the upper and lower end regions (2a, 2a'; 2b, 2b') of the guide rails (2, 2') are formed like ramps.

19. Window lifter according to at least one of the preceding claims **characterised in that** the guide rails (2, 2') are formed curved in the longitudinal direction relative to the base surface of the carrier plate (1).

20. Window lifter according to at least one of the preceding claims **characterised in that** the carrier plate (1) is provided with additional guide slots and/or guide elements shaped out of the base surface (B) of the carrier plate (1) to hold slide or fixing elements connected to structural parts of elements of a vehicle door, more particularly arm rests.

21. Window lifter according to at least one of the preceding claims **characterised in that** the imprint of the guide rail (2, 2') is formed by deep drawing or stamping a metal carrier plate (1) or by injection moulding or thermoforming a plastics carrier plate (1).

22. Window lifter according to at least one of the preceding claims **characterised in that** the side edges of the carrier plate (1) are connected sealed against moisture to a carrier plate socket of the vehicle door.

## Revendications

1. Lève-vitre à câble de transmission ou à câble Bowden pour véhicule automobile, comportant au moins un rail de guidage (2, 2') agencé sur une plaque de support (1) d'une portière de véhicule, mis en forme à partir de la surface de base (B) de la plaque de support (1) et présentant une fente (20, 20') s'étendant dans sa direction longitudinale ; un entraîneur (3, 3') mobile en translation le long du rail de guidage (2, 2') et recevant une vitre, ledit entraîneur prenant appui au moins partiellement contre le côté extérieur (21) et contre le côté intérieur (22) du rail de guidage (2, 2') et traversant la fente (20, 20') ; des dispositifs de renvoi (5, 5' ; 6, 6') agencés aux extrémités du rail de guidage (2, 2') ; et un câble (8) relié en termes d'action à l'entraîneur (3, 3') et à un dispositif d'entraînement (7, 70), et guidé via le dispositif de renvoi,
**caractérisé en ce que** la plaque de support (1) remplit elle-même une fonction de séparation et d'étanchement, et **en ce que** le côté ouvert des rails de guidage (2, 2') mis en forme à partir de la surface de base (B) de la plaque de support (1) est recouvert de façon étanche vis-à-vis de l'humidité.

2. Lève-vitre selon la revendication 1, **caractérisé en ce que** le recouvrement (9) est réalisé de façon plane et est agencé dans le plan de la surface de base (B) de la plaque de support (1) ou du rail de guidage (2, 2').

3. Lève-vitre selon la revendication 1 ou 2, **caractérisé en ce que** le recouvrement est constitué par un ruban adhésif permanent (9).

4. Lève-vitre selon la revendication 1 ou 2, **caractérisé en ce que** le recouvrement est constitué par une pièce moulée (10) mise en place dans le côté intérieur (22) du rail de guidage (2, 2').

5. Lève-vitre selon la revendication 1 ou 2, **caractérisé en ce que** le recouvrement est constitué par un élément moulé (11) qui repose sur les bords de la plaque de support (1) adjacents au rail de guidage (2, 2') et qui est relié à la plaque de support (1).

6. Lève-vitre selon la revendication 1 ou 2, **caractérisé en ce que** le recouvrement est constitué par un élément moulé (12) qui est susceptible d'être mis en place par des saillies latérales (121, 122) dans des gorges (21, 22) du rail de guidage (2, 2') mis en forme à partir de la surface de base (B) de la plaque de support (1), ou bien dans des gorges, dans des fentes ou dans des crochets sur la plaque de support (1), et qui présente un logement à câble (123) pour guider le câble (8).

7. Lève-vitre selon les revendications 4, 5 ou 6, **caractérisé en ce que** la pièce moulée (10) ou l'élément moulé (11) est constitué(e) par une pièce ou par un élément moulé(e) en matière plastique.

8. Lève-vitre selon l'une quelconque des revendications précédentes, **caractérisé en ce que** l'entraîneur (3, 3') est réalisé en deux parties, et **en ce que** l'une des parties (31) de l'entraîneur (3, 3') prend appui contre le côté extérieur (21) du rail de guidage (2, 2') et l'autre partie (32) de l'entraîneur (3, 3') prend appui contre le côté intérieur (22) du rail de guidage (2, 2').

9. Lève-vitre selon la revendication 8, **caractérisé en ce que** l'entraîneur (3, 3') est subdivisé dans la zone de la chambre à embout de câble (36) et présente deux ouvertures (41, 41' ; 42, 42') au-dessus et au-dessous de la chambre à embout de câble (36) pour recevoir l'élément complémentaire formant la deuxième partie (32) de l'entraîneur (3, 3').

10. Lève-vitre selon la revendication 9, **caractérisé en ce que** l'élément complémentaire (32) est constitué par une équerre en tôle (45) comportant un insert en matière plastique (46).

11. Lève-vitre selon l'une quelconque des revendications 1 à 7, **caractérisé en ce que** l'entraîneur (3, 3') est réalisé d'un seul tenant, **en ce que** la partie (33) de l'entraîneur (3, 3') prenant appui contre le côté extérieur (21) du rail de guidage (2, 2') est reliée au câble (8), et **en ce que** la partie (34) de l'entraîneur (3, 3') prenant appui contre le côté intérieur (22) du rail de guidage (2, 2') est conformée de telle sorte que l'entraîneur (3, 3') est susceptible d'être mis en place dans la fente (20) du rail de guidage (2, 2') et d'être relié en coopération de formes au rail de guidage (2, 2') et translatable en direction longitudinale du rail de guidage (2, 2').

12. Lève-vitre selon la revendication 11, **caractérisé en ce que** le câble (8) est relié de façon excentrique à l'entraîneur (3, 3').

13. Lève-vitre selon la revendication 12, **caractérisé en ce que** le câble (8) est relié à l'entraîneur (3, 3') à l'extérieur de la surface de guidage déterminée par la forme estampée du rail de guidage (2, 2').

14. Lève-vitre selon l'une quelconque des revendications 1 à 7, **caractérisé en ce que** l'entraîneur (3, 3') est réalisé d'un seul tenant et comprend une zone allongée de fixation et de glissement (30) qui, après enfichage à travers la fente (20) du rail de guidage (2, 2') et après rotation de l'axe d'enfichage (300) autour de l'axe transversal de l'entraîneur (3, 3') réalisé d'un seul tenant, prend appui contre le côté extérieur ou contre le côté intérieur sur les bords du rail de guidage (2, 2') qui sont adjacents à la fente (20) du rail de guidage (2, 2').

15. Lève-vitre selon l'une quelconque des revendications précédentes, **caractérisé en ce que** le câble (8) est relié à sa chambre à embout de câble (36) au milieu par rapport à l'entraîneur (3, 3').

16. Lève-vitre selon l'une quelconque des revendications précédentes, destiné à des plaques de support bombées, **caractérisé en ce que** le câble (8) passant entre les dispositifs de renvoi (5, 5' ; 6, 6') ne recoupe pas la surface de base (B) de la plaque de support (1).

17. Lève-vitre selon l'une quelconque des revendications précédentes, destiné à des plaques de support bombées, **caractérisé en ce que** le câble (8) passant entre les dispositifs de renvoi (5, 5' ; 6, 6') recoupe au moins localement la surface de base (B) de la plaque de support (1), et **en ce que** le recouvrement (9) est réalisé de manière à ne toucher à aucun endroit le câble (8).

18. Lève-vitre selon l'une quelconque des revendications précédentes, **caractérisé en ce que** les zones d'extrémité supérieure et inférieure (2a, 2a' ; 2b, 2b') des rails de guidage (2, 2') sont réalisées sous la forme de rampe.

19. Lève-vitre selon l'une quelconque des revendications précédentes, **caractérisé en ce qu'**en direction longitudinale les rails de guidage (2, 2') sont formés de manière arquée par rapport à la surface de base de la plaque de support (1).

20. Lève-vitre selon l'une quelconque des revendications précédentes, **caractérisé en ce qu'**il est prévu dans la plaque de support (1) des fentes de guidage supplémentaires et/ou des éléments de guidage mis en forme à partir de la surface de base (B) de la plaque de support (1) pour recevoir des éléments de glissement ou de fixation reliés à des parties constitutives d'éléments d'une portière de véhicule, en particulier d'accoudoirs.

21. Lève-vitre selon l'une quelconque des revendications précédentes, **caractérisé en ce que** la forme estampée du rail de guidage (2, 2') est réalisée par emboutissage profond ou par poinçonnage d'une plaque de support métallique (1) ou par coulée par injection ou par thermoformage d'une plaque de support (1) en matière plastique.

22. Lève-vitre selon l'une quelconque des revendications précédentes, **caractérisé en ce que** les bords latéraux de la plaque de support (1) sont reliés de façon étanche vis-à-vis de l'humidité à un logement de plaque de support de la portière de véhicule.
